# EUROPEAN PATENT SPECIFICATION

(11) **EP 2 689 887 B1**
(45) Date of publication and mention of the grant of the patent: **15.07.2015**
(21) Application number: 13177281.6
(22) Date of filing: 19.07.2013
(51) Int. Cl.: B23P 19/06, B25B 29/02, F16B 31/04, F16B 37/08

(54) **Tension device for prestressing an assembly by means of a threaded rod, and method for assembling the tension device**
Spannvorrichtung zum Vorspannen einer Anordnung mittels Gewindestange und Verfahren zur Montage der Spannvorrichtung
Dispositif de tension pour mise en précontrainte d'un assemblage au moyen d'une tige filetée et procédé d'assemblage du dispositif de tension

(30) Priority: 25.07.2012 FR 1257208
(43) Date of publication of application: 29.01.2014
(73) Proprietor: Aktiebolaget SKF, 415 50 Göteborg (SE)
(72) Inventor: Faus, José, 92300 LEVALLOIS-PERRET (FR); Declerck, Didier, 78260 ACHERES (FR)
(74) Representative: Casalonga, Axel

(56) References cited:
- EP-A1- 0 922 527
- DE-A1-102007 015 975
- GB-A- 2 193 549
- US-A1- 2009 293 418
- US-A1- 2011 192 257

## Description

The present invention relates to a device according to the preamble of claim 1 for tensioning a (threaded) rod before it is locked in position, for example by means of a nut, the invention relating in particular to devices for prestressing the threaded rods used for fixing mechanical parts to one another in the nuclear sector, the building sector, or alternatively the wind energy sector.

The present invention relates also to a method for assembling such a tension device.

A device according to the preamble of claim 1 and a method of assembling it are known from DE 10 2007 015 975 A1.

Tension devices generally comprise an actuator able to exert an axial traction force on one end of a threaded rod by way of a tie. The actuator bears on a surface of a structure to be clamped via a tubular skirt surrounding one end of the threaded rod, opposite the end subjected to the axial force of the actuator. The actuator comprises a cylinder and a piston sliding in the cylinder and forming with the cylinder an annular chamber supplied with fluid under pressure.

Such a tension device is assembled axially and generally has a large axial space requirement, such that it is not possible to use such a tension device in the event of a small space requirement between the threaded rod to be prestressed, the mechanical parts to be assembled and the outside environment.

There is therefore a need to provide a device for tensioning a threaded rod which can be mounted on the threaded rod in the case of a very small space requirement.

It is therefore the aim of the present invention to overcome these disadvantages.

More particularly, the present invention aims to provide a device for tensioning a threaded rod which can be mounted on the threaded rod in the case of a very small space requirement, for example of about 32 mm for a threaded rod having a diameter of 76 mm, while maintaining a large residual prestress load, of the order of 2000 kN.

The subject of the invention is a device for tensioning a threaded rod comprising an actuator able to exert an axial tensile force on the threaded rod with respect to a structure to be clamped, the said tension device comprising a cylinder, a piston and a tubular skirt in contact with the cylinder and a surface of the said structure to be tensioned, and a tie for transmitting the axial tensile force of the actuator towards an end of the threaded rod.

The tie and the tubular skirt each comprise at least two semicylindrical parts each having two substantially planar axial surfaces, the two axial surfaces of one semicylindrical part being joined radially respectively with one of the two axial surfaces of the other semicylindrical part, so as to form a part of revolution.

The tie and the tubular skirt are mounted radially around the threaded rod to be tensioned, thus allowing the assembly of the tension device even in the case of a very small space requirement.

Advantageously, the tubular skirt comprises means for centring and means for fixing the two semicylindrical skirt parts.

According to one embodiment, the means for centring the two skirt parts comprise centring screws screwed into each of the planar axial surfaces of one of the skirt parts and intended to come into planar contact with the planar axial surfaces of the other skirt part.

The means for fixing the two skirt parts comprise, for example, means made of magnetized material fixed on each of the planar axial surfaces of one of the skirt parts and intended to come into planar contact with the planar axial surfaces of the other skirt part.

The means made of magnetized material may comprise magnetized washers intended to be housed in a counterbore made in each of the planar axial surfaces of one of the skirt parts and fixed on the said skirt part using fixing means, such as, for example, fixing screws.

According to another embodiment, the tie comprises means for centring and means for fixing the two semicylindrical tie parts.

Advantageously, the means for centring two tie parts comprise pins arranged in holes of corresponding shape made in each of the tie parts perpendicularly to the junction surfaces and centring screws screwed into each of the planar axial surfaces of one of the tie parts and intended to come into planar contact with the planar axial surfaces of the other tie part.

The means for fixing the two tie parts may comprise a fixing ring surrounding the tie and intended to be clipped onto the tie using clipping means.

The fixing ring is, for example, maintained in position around the tie by cylindrical pins intended to be housed in a counterbore made in each of the junction surfaces of the two tie parts.

According to a second aspect, the invention relates to a method for assembling a tension device as described above, in which the cylinder and the piston are mounted axially on the threaded rod to be prestressed, the two semicylindrical tie parts are assembled radially around the threaded rod and the two semicylindrical parts of the skirt are assembled radially around the threaded rod.

Thus, the radial assembly of the tie and of the tubular skirt around the threaded rod makes it possible to significantly reduce the axial dimension along the axis Y-Y of the tension device.

Advantageously, the fixing ring is clipped onto the tie.

Once the two skirt parts are assembled around the threaded rod, the assembly formed by the cylinder and the piston, the two semicylindrical tie parts and the fixing ring can be slid axially by screwing the tie towards the surface of the structure to be clamped and the actuator comes into axial contact against the tubular skirt.

The present invention will be better understood from reading the description of some embodiments, given by way of non-limiting examples and illustrated in the appended drawings:

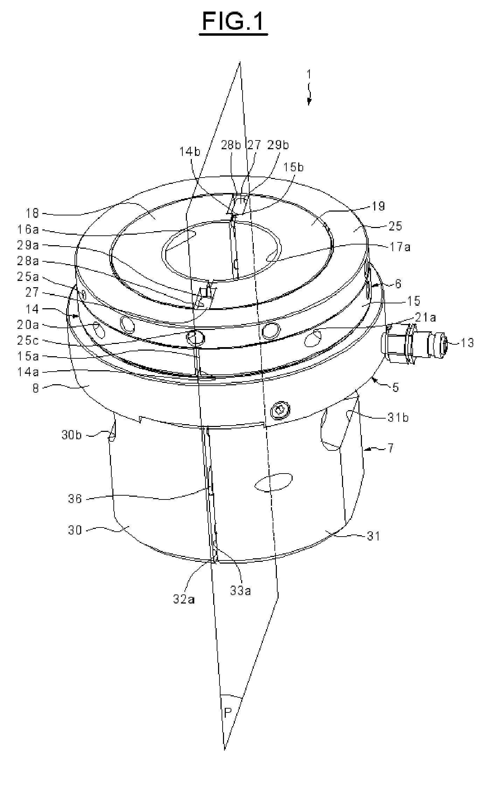

- Figure 1 is a perspective view of a tension device according to the invention;

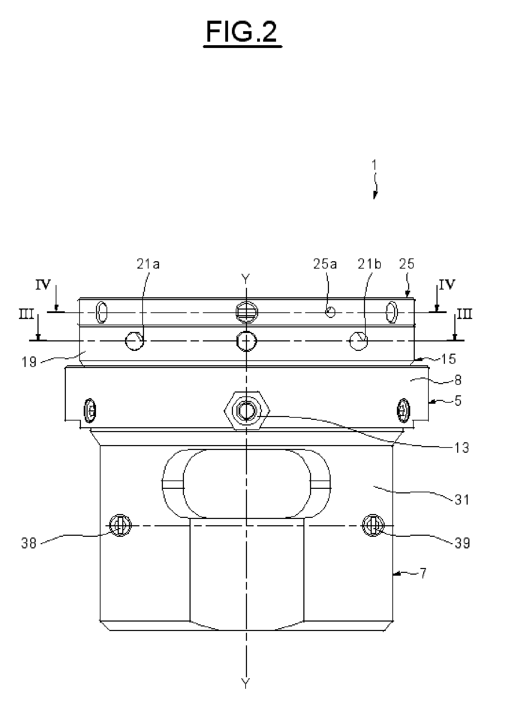

- Figure 2 is a side view of the tension device according to Figure 1;
- Figure 3 is a view in radial section III-III of the tension device according to Figure 2;

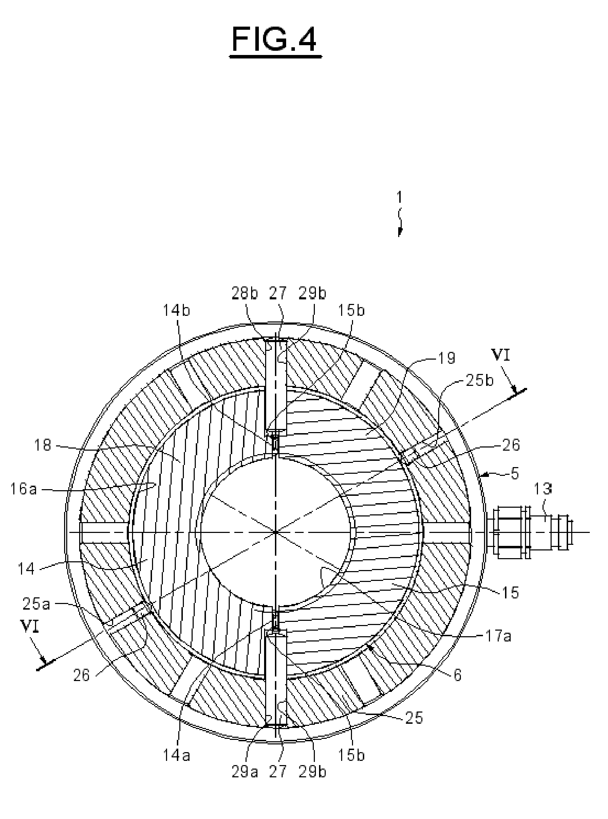

- Figure 4 is a view in radial section IV-IV of the tension device according to Figure 2;

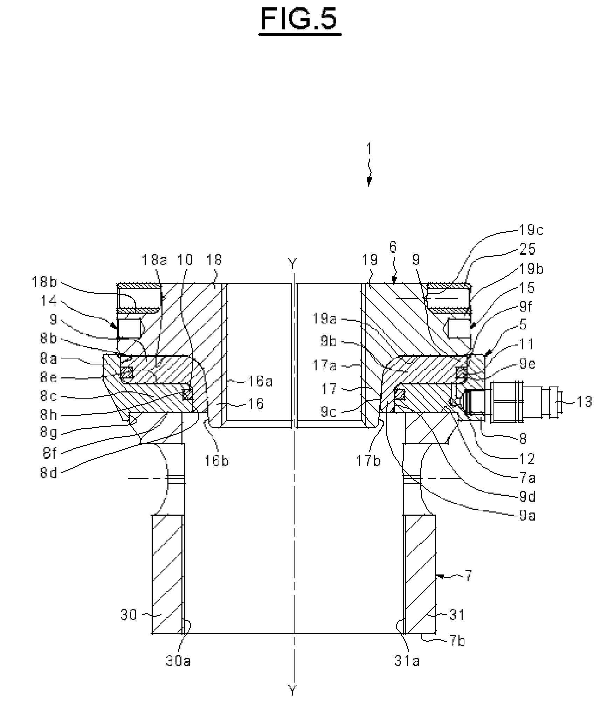

- Figure 5 is a view in axial section V-V of the tension device according to Figure 3;

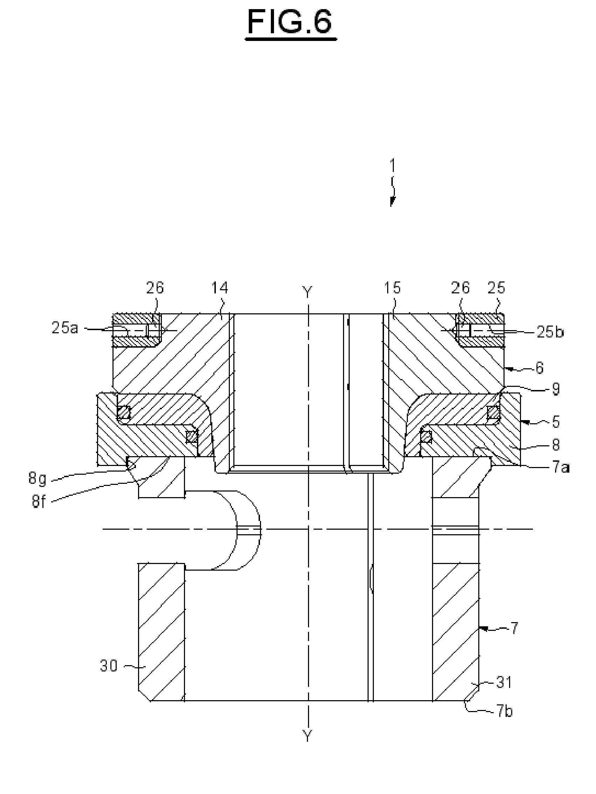

- Figure 6 is a view in axial section VI-VI of the tension device according to Figure 4;
- Figure 7 is a view in axial section VII-VII of the tension device according to Figure 3;
- Figure 8 is a view in radial section VIII-VIII of the tension device according to Figure 7;
- Figure 9 is a view in radial section IX-IX of the tension device according to Figure 7; and
- Figures 10 to 16 represent the method for assembling the tension device according to the invention.

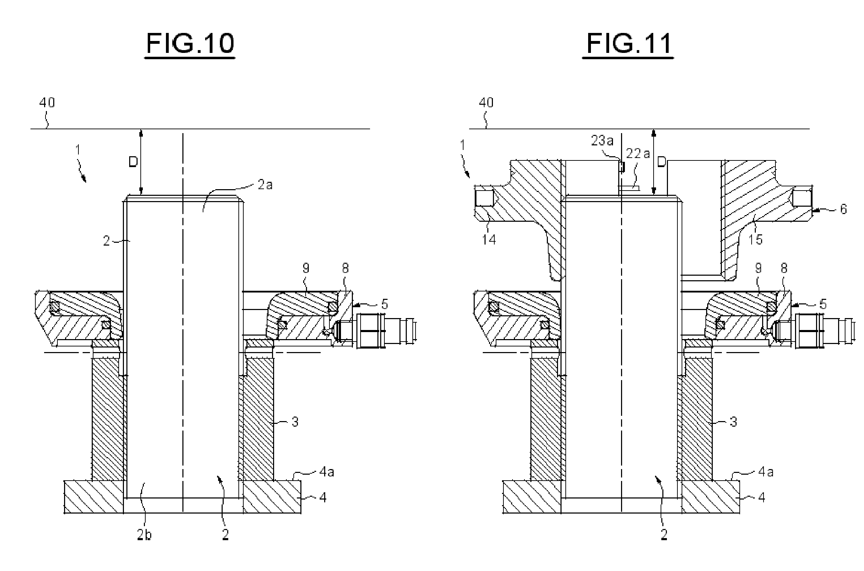

As illustrated in the figures, the tension device, of axial axis Y-Y, referenced 1 in its entirety, is intended to axially prestress a threaded rod 2 represented in Figures 10 to 16. The threaded rod 2 is then blocked in position by a nut 3 bearing on a surface 4a of a structure 4 to be clamped, generally comprising at least two mechanical parts to be assembled, and represented in the form of a plate in Figures 10 to 16.

The tension device 1 comprises an actuator 5, a tie 6 and a tubular skirt 7. The actuator 5 is able to exert an axial traction force on an end 2a of the threaded rod 2 via the tie 6. The actuator 5 bears on the surface 4a of the structure 4 to be clamped via the tubular skirt 7 surrounding an end 2b of the threaded rod 2, opposite the end 2a subjected to the axial force of the actuator 5. The actuator 5 comprises a cylinder 8 and a piston 9 sliding in the cylinder 8 and forming with the cylinder 8 an annular chamber (not shown) supplied with fluid under pressure. The cylinder 8 has the general shape of an annular cup comprising an axial portion 8a having a bore 8b and a base 8c in the form of a radial portion extending inwardly from an end of the axial portion 8a and having a bore 8d. The radial portion 8c forms a radial shoulder 8e for the piston 9. On the opposite side to the shoulder 8e, the base 8c comprises a radial bearing surface 8f in contact with an end 7a of the tubular skirt 7 opposite the end 7b in contact with the surface 4a of the structure 4 to be tensioned. The base 8c of the cylinder 8 comprises an axial shoulder 8g extending towards the structure 4 to be tensioned and surrounding the end 7a of the tubular skirt 7 in order to centre the cylinder 8 on the tubular skirt 7 and to maintain the tubular skirt 7 radially with respect to the cylinder 8.

The piston 9 has an annular general shape comprising an axial tubular portion 9a and an annular collar 9b extending radially outwards from an end of the axial tubular portion 9a. The axial tubular portion 9a has a bore 9c of substantially frustoconical shape and an outer surface 9d of substantially cylindrical shape in contact with the bore 8d of the base 8c of the cylinder 8. The annular collar 9b comprises an outer axial surface 9e in contact with the bore 8b of the axial portion 8a of the cylinder 8. The annular chamber (not shown) is formed axially between the annular collar 9b of the piston 9 and the radial base 8c of the cylinder 8, and radially between the axial portion 8a of the cylinder 8 and the tubular portion 9a of the piston 9. The radial base 8c of the cylinder 8 comprises an annular groove 8h formed on its bore 8d and in which there is arranged a seal 10 in frictional contact with the outer surface 9d of the tubular portion 9a of the piston 9. Analogously, the annular collar 9b of the piston 9 comprises an annular groove 9f formed on its outer surface 9e and in which there is arranged a seal 11 in frictional contact with the bore 8b of the axial portion 8a of the cylinder 8. The seals 10 and 11 serve to seal the annular chamber.

The actuator 5 comprises means for supplying pressurized fluid which are partly represented in the figures. An inlet 12 is formed in the base 8c of the cylinder 8, opening on one side into the annular chamber at the radial surface 8c, and at the opposite side towards the outside. A hydraulic connection 13 is fixed to the outside of the cylinder 8 in order to supply the inlet 12 with pressurized fluid.

The tie 6 comprises two substantially identical tie parts 14, 15. In a variant, it would be possible to provide another number of tie parts greater than two. Each tie part 14, 15 takes the form of an angular portion of a part of revolution delimited by radial planes, the said part of revolution comprising a tubular portion 16, 17 having a bore 16a, 17a provided with a tapping (not shown) and a substantially frustoconical outer surface 16b, 17b in contact with the bore 9c of the piston 9, and a radial portion 18, 19 having a lower radial shoulder 18a, 19a in axial contact with the annular collar 9b of the piston 9 and an upper radial shoulder 18b, 19b.

As illustrated, the tie 6 comprises two substantially semicylindrical tie parts 14, 15, that is to say each occupying an angular sector substantially equal to 180°. The tie parts 14, 15 are situated on either side of a radial parting plane P.

The first tie part 14 comprises two substantially planar axial junction surfaces 14a, 14b joined radially respectively with a substantially planar axial junction surface 15a, 15b of the second tie part 15, so as to form a part of revolution of 360°.

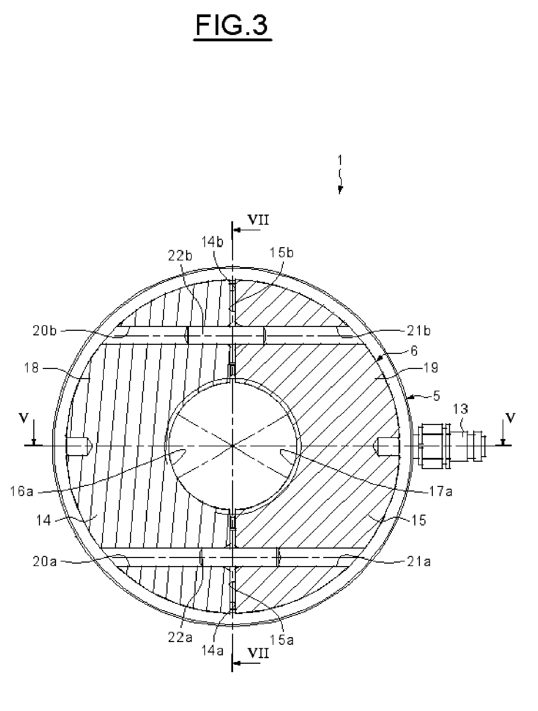

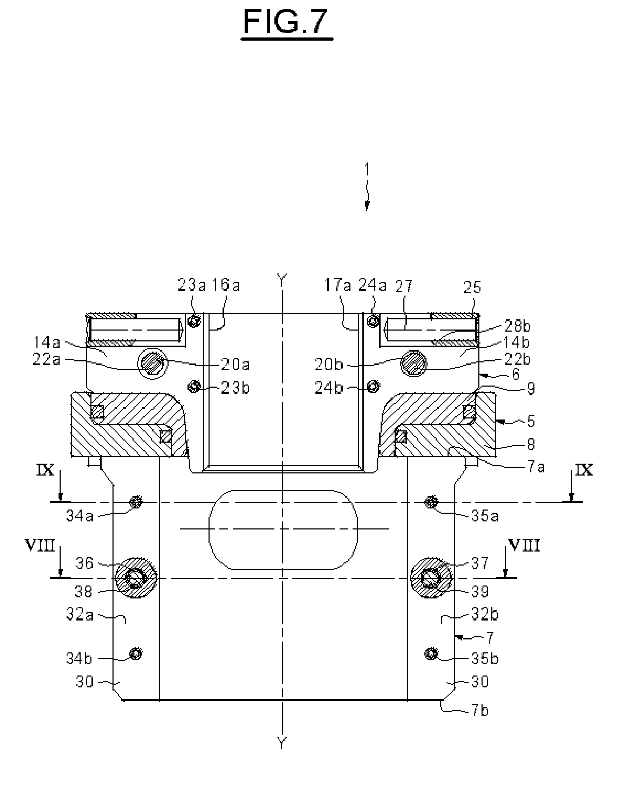

As illustrated in detail in Figures 3 and 7, each of the radial portions 18 and 19 is provided with two holes 20a, 20b and 21a, 21b parallel to the parting direction of the two tie parts 14, 15, perpendicularly to the junction surfaces 14a, 14b, 15a, 15b, and made in the thickness of the radial portions 18, 19. A hole 20a of one of the tie parts 14 comes opposite a hole 21a of the other tie part 15. Guide means 22a, 22b, in the form of studs, pegs or pins, are respectively mounted slideably in the holes 20a, 21a and 20b, 21b of the corresponding tie parts 14, 15, maintaining an axial passage (not referenced) between the two tie parts 14, 15. Thus, the two tie parts 14, 15 are centred with respect to one another so as to ensure the correspondence of the tapping made on their respective bore 16a, 17a.

Each of the radial portions 18 and 19 of the tie parts 14, 15 additionally comprises additional centring means 23a, 23b, 24a, 24b, numbering four, illustrated in Figure 7. The additional centring means 23a, 23b, 24a, 24b comprise centring screws screwed into each of the planar axial surfaces 14a, 14b of one of the tie parts 14 and intended to come into planar contact with the planar axial surfaces 15a, 15b of the other tie part 15. The pins 22a, 22b and the screws 23a, 23b, 24a, 24b form means for guiding one tie part 14 with respect to the other 15 and making it possible to position the tie parts 14, 15 easily and reliably.

The two tie parts 14, 15 are maintained in an assembled position with the aid of fixing means comprising a fixing ring 25 surrounding the tie and intended to be mounted on the upper radial shoulder 18b, 19b. The fixing ring 25 is intended to be clipped onto the tie 6 using clipping means 26, such as ball screws, each inserted into a hole 25a, 25b made radially in the thickness of the fixing ring 25. The ball screws 26 have, at one end, a shape, for example a pointed shape, matching the shape of a radial notch 18c, 19c made in the corresponding radial portion 18, 19. The fixing ring 25 is maintained in position around the tie 6 by cylindrical pins 27, for example numbering two, intended to be housed in a counterbore 28a, 28b, 29a, 29b made in each of the junction surfaces 14a, 14b, 15a, 15b of the two tie parts 14, 15. A radial through-hole 25c, 25d is made for this purpose in the fixing ring 25. When the fixing ring 25 is assembled on the tie 6, the diameter of the fixing ring 25 is substantially equal to the diameter of the radial portions 18 and 19.

The tie 6 is provided with additional holes (not referenced) allowing the manual screwing of the assembly consisting of the tie 6 and the fixing ring 25 by means, for example, of a pin having a diameter corresponding to the diameter of the additional holes.

The tubular skirt 7 comprises two substantially identical skirt parts 30, 31. Each tubular skirt part 30, 31 takes the form of an angular portion of a part of revolution delimited by radial planes, and having a bore 30a, 31a. The tubular skirt 7 has a first end 7a in contact with a radial bearing surface 8f of the cylinder 8 and a second end 7b, opposite the first end 7a, in contact with the surface 4a of the structure 4 to be tensioned. The end 7a of the tubular skirt 7 is centred and maintained radially by the axial shoulder 8g of the base 8c of the cylinder 8.

As illustrated, the tubular skirt 7 comprises two substantially semicylindrical skirt parts 30, 31, that is to say each occupying an angular sector substantially equal to 180°. The skirt parts 30, 31 are situated on either side of a radial parting plane P.

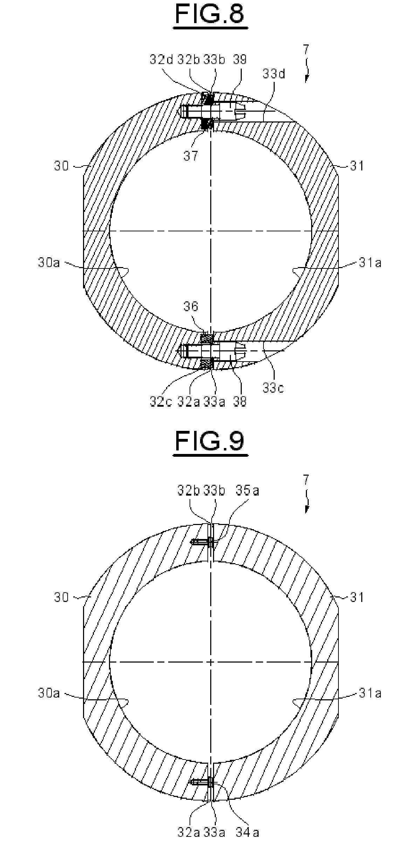

The first skirt part 30 comprises two substantially planar axial surfaces 32a, 32b joined radially respectively with a substantially planar axial surface 33a, 33b of the second skirt part 31, so as to form a part of revolution of 360°. The axial surfaces 32a, 32b, 33a, 33b can be seen in detail in Figures 8 and 9.

As illustrated in detail in Figures 7 to 9, the tubular skirt 7 comprises centring means 34a, 34b, 35a, 35b, numbering four, illustrated in Figures 7 and 9. The centring means 34a, 34b, 35a, 35b comprise centring screws screwed into each of the planar axial surfaces 30a, 30b of one of the skirt parts 30 and intended to come into planar contact with the planar axial surfaces 31a, 31b of the other skirt part 31. The shoulder 8g of the cylinder 8 and the screws 34a, 34b, 35a, 35b form means for centring one skirt part 30 with respect to the other 31 and make it possible to position the skirt parts 30, 31 easily and reliably.

The two skirt parts 30, 31 are maintained in an assembled position with the aid of fixing means comprising means made of magnetized material, such as magnetized annular washers 36, 37 illustrated in Figures 7 and 8, housed in a counterbore 32c, 32d made in each of the planar axial surfaces 32a, 32b of one of the skirt parts 30. The magnetized annular washers 36, 37 are fixed on the corresponding planar axial surface 32a, 32b by a fixing screw 38, 39 screwed into the skirt part 30 comprising the counterbores 32c, 32d and inserted into a hole 33c, 33d parallel to the parting direction of the two skirt parts 30, 31, perpendicularly to the junction surfaces 32a, 32b, 33a, 33b, made in the thickness of the other skirt part 31. The fixing screws 38 and 39 also serve for centring purposes for manually placing the two skirt parts 30, 31.

The tubular skirt 7 is made of metallic material, such as, for example, of steel, so as to be attracted by the magnets 36, 37, thus forming the means for fixing the two skirt parts 30, 31 to one another.

Each skirt part 30, 31 additionally comprises an opening 30b, 31b in order to insert a tightening pin or tightening spanner (not shown) allowing the rotation of the nut 3, in order to tighten the nut 3 against the plate 4 to be clamped when the tension device 1 covers the end 2a of the threaded rod 2.

The tension device 1 is assembled as follows with reference to Figures 10 to 16. The tension device is assembled around the threaded rod 2 once the threaded rod 2 and the nut 3 are mounted on the structure 4 to be tensioned.

In a first step, illustrated in Figure 10, the actuator 5 comprising the cylinder 8 and the piston 9 is mounted axially through a spacing D between the end 2a of the threaded rod 2 and a surface 40 of an external element greatly reducing the mounting space. For example, the spacing D must be at least equal to the height of the actuator 5. In the example illustrated, the spacing is equal to 32 mm.

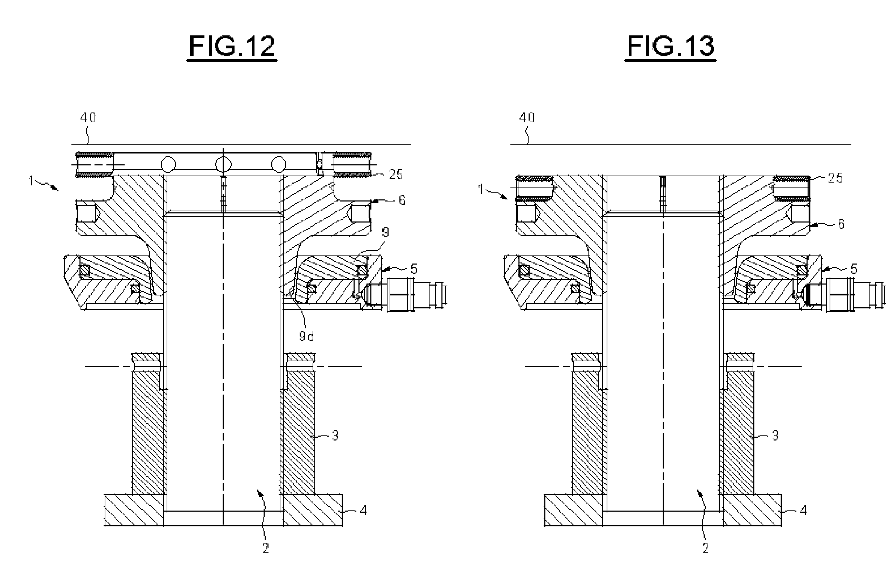

In a second step, illustrated in Figure 11, the two semicylindrical parts 14, 15 of the tie 6 are assembled radially around the threaded rod 2 and centred in position via cylindrical pins 22a, 22b and centring screws 23a, 23b, 24a, 24b (see in detail Figure 7). Once the tie parts 14, 15 are assembled, the tie 6 is slid axially towards the actuator 5 in order to be housed in the bore 9c of the piston 9, as illustrated in Figure 12. The fixing ring 25 is then positioned around the tie parts 14, 15 against the radial shoulder 18b, 19b of the tie parts 14, 15, in order to maintain them radially in position with respect to one another. Figure 13 illustrates the tie 6 assembled and positioned with respect to the threaded rod 2 and to the actuator 5.

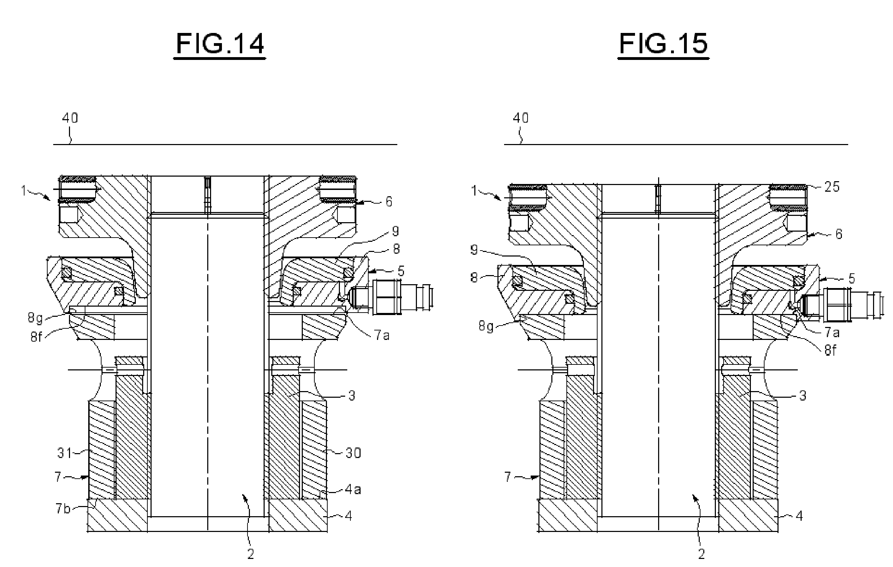

In the step illustrated in Figure 14, the two semicylindrical parts 30, 31 of the tubular skirt 7 are assembled radially around the threaded rod 2, and in particular around the nut 3. In the step illustrated in Figure 15, the actuator 5 is slid towards the tubular skirt 7 in order to be centred by means of the axial shoulder 8g of the base 8c of the cylinder 8. The first end 7a of the tubular skirt 7 is in contact with the radial bearing surface 8f of the cylinder 8, and the second end 7b of the skirt 7, opposite the first end 7a, is in contact with the surface 4a of the structure 4 to be tensioned.

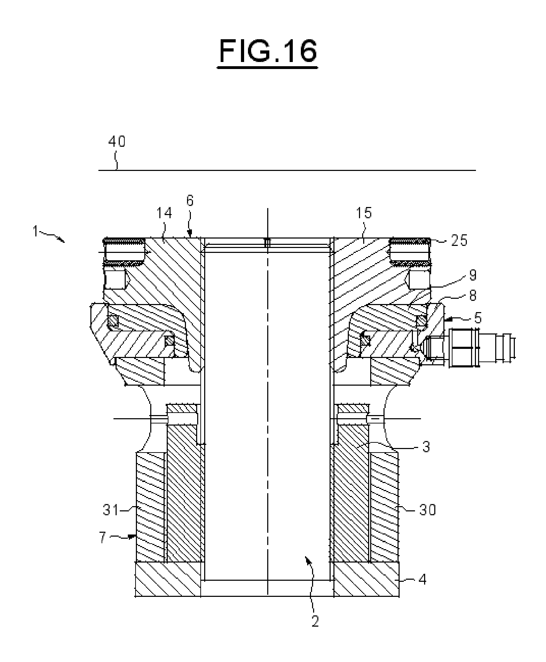

Finally, during a final step illustrated in Figure 16, the assembly formed by the tie 6 and the fixing ring 25 is made to move helically towards the actuator 5 so as to be positioned ready to be used to tension the threaded rod 2.

By virtue of the invention described, the tension device makes it possible to prestress threaded rods even in an environment having a very small space requirement. Specifically, the radial assembly of the tie and the tubular skirt around the threaded rod makes it possible to significantly reduce the axial dimension along the axis Y-Y of the tension device.

## Claims

1. Device (1) for tensioning a threaded rod (2) comprising an actuator (5) able to exert an axial tensile force on the threaded rod (2) with respect to a structure (4) to be tensioned, the said tension device (1) comprising a cylinder (8), a piston (9), a tubular skirt (7) in contact with the cylinder (8) and a surface (4a) of the said structure (4) to be tensioned, and a tie (6) for transmitting the axial tensile force of the actuator (5) towards an end (2a) of the threaded rod (2), **characterized in that** the tie (6) and the tubular skirt (7) each comprise at least two semicylindrical parts (14, 15; 30, 31) each having two substantially planar axial surfaces (14a, 14b, 15a, 15b; 32a, 32b, 33a, 33b), the two axial surfaces (14a, 14b; 32a, 32b) of one semicylindrical part (14, 30) being joined radially respectively with one of the two axial surfaces (15a, 15b; 33a, 33b) of the other semicylindrical part (15, 31), so as to form a part of revolution.

2. Tension device according to Claim 1, in which the tubular skirt (7) comprises means (7a, 34a, 34b, 35a, 35b) for centring and means (36, 37, 38, 39) for fixing the two semicylindrical skirt parts (30, 31).

3. Tension device according to Claim 2, in which the means (34a, 34b, 35a, 35b) for centring the two skirt parts (30, 31) comprise centring screws screwed into each of the planar axial surfaces (32a, 32b) of one of the skirt parts (30) and intended to come into planar contact with the planar axial surfaces (33a, 33b) of the other skirt part (31).

4. Tension device according to any one of the preceding claims, in which the means (36, 37, 38, 39) for fixing the two skirt parts (30, 31) comprise means (36, 37) made of magnetized material fixed on each of the planar axial surfaces (32a, 32b) of one of the skirt parts (30) and intended to come into planar contact with the planar axial surfaces (33a, 33b) of the other skirt part (31).

5. Tension device according to Claim 4, in which means (36, 37) made of magnetized material comprise magnetized washers intended to be housed in a counterbore (32c, 32d) made in each of the planar axial surfaces (32a, 32b) of one of the skirt parts (30) and fixed on the said skirt part (30) using fixing means (38, 39).

6. Tension device according to Claim 5, in which the means (38, 39) for fixing the magnetized washers (36, 37) on the planar axial surfaces (32a, 32b) of the corresponding skirt part (30) comprise fixing screws.

7. Tension device according to any one of the preceding claims, in which the tie (6) comprises means (22a, 22b, 23a, 23b, 24a, 24b) for centring and means (25, 26, 27) for fixing the two semicylindrical tie parts (14, 15).

8. Tension device according to Claim 7, in which the means for centring two tie parts (14, 15) comprise pins (22a, 22b) arranged in holes (20a, 20b, 21a, 21b) of corresponding shape made in each of the tie parts (14, 15) perpendicularly to the junction surfaces (14a, 14b, 15a, 15b) and centring screws (23a, 23b, 24a, 24b) screwed into each of the planar axial surfaces (14a, 14b) of one of the tie parts (14) and intended to come into planar contact with the planar axial surfaces (15a, 15b) of the other tie part (15).

9. Tension device according to either of Claims 7 and 8, in which the means for fixing the two tie parts (14, 15) comprise a fixing ring (25) surrounding the tie (6) and intended to be clipped onto the tie (6) using clipping means (26).

10. Tension device according to Claim 9, in which the fixing ring (25) is maintained in position around the tie (6) by cylindrical pins (27) intended to be housed in a counterbore (28a, 28b, 29a, 29b) made in each of the junction surfaces (14a, 14b, 15a, 15b) of the two tie parts (14, 15).

11. Method for assembling a tension device (1) according to any one of the preceding claims, in which the cylinder (8) and the piston (9) are mounted axially on the threaded rod (2) to be prestressed, the two semicylindrical tie parts (14, 15) are assembled radially around the threaded rod (2) and the two semicylindrical parts (30, 31) of the skirt are assembled radially around the threaded rod (2).

12. Assembly method according to Claims 11, in which the fixing ring (25) is clipped onto the tie (6).

13. Assembly method according to Claim 12, in which, once the two skirt parts (30, 31) are assembled around the threaded rod (2), the assembly formed by the cylinder (8) and the piston (9), the two semicylindrical tie parts (14, 15) and the fixing ring (25) is slid axially towards the surface (4a) of the structure (4) to be tensioned.

## Patentansprüche

1. Vorrichtung (1) zum Vorspannen einer Gewindestange (2), welche einen Betätiger (5) umfasst, der in der Lage ist, eine axiale Zugkraft auf die Gewindestange (2) bezüglich einer vorzuspannenden Struktur (4) auszuüben, wobei die Spannvorrichtung (1) einen Zylinder (8), einen Kolben (9), eine rohrförmige Schürze (7) in Kontakt mit dem Zylinder (8) und eine Fläche (4a) der vorzuspannenden Struktur (4) sowie ein Zugelement (6) zum Übertragen der axialen Zugkraft des Betätigers (5) auf ein Ende (2a) der Gewindestange (2) umfasst, **dadurch gekennzeichnet, dass** das Zugelement (6) und die rohrförmige Schürze (7) jeweils mindestens zwei halbzylindrische Teile (14, 15; 30, 31) umfassen, die jeweils zwei im Wesentlichen ebene axiale Flächen (14a, 14b, 15a, 15b; 32a, 32b, 33a, 33b) aufweisen, wobei die beiden axialen Flächen (14a, 14b; 32a, 32b) eines halbzylindrischen Teils (14, 30) jeweils radial mit einer der beiden axialen Flächen (15a, 15b; 33a, 33b) des anderen halbzylindrischen Teils (15, 31) verbunden sind, um so einen Teil einer Umdrehung zu bilden.

2. Spannvorrichtung nach Anspruch 1, wobei die rohrförmige Schürze (7) Mittel (7a, 34a, 34b, 35a, 35b) zum Zentrieren und Mittel (36, 37, 38, 39) zum Befestigen der beiden halbzylindrischen Schürzenteile (30, 31) umfasst.

3. Spannvorrichtung nach Anspruch 2, wobei die Mittel (34a, 34b, 35a, 35b) zum Zentrieren der beiden Schürzenteile (30, 31) Zentrierschrauben umfassen, die in jede der ebenen axialen Flächen (32a, 32b) eines der Schürzenteile (30) eingeschraubt sind und zum ebenen Inkontaktkommen mit den ebenen axialen Flächen (33a, 33b) des anderen Schürzenteils (31) vorgesehen sind.

4. Spannvorrichtung nach einem der vorhergehenden Ansprüche, wobei die Mittel (36, 37, 38, 39) zum Befestigen der beiden Schürzenteile (30, 31) Mittel (36, 37) aus einem magnetisierten Werkstoff umfassen, die auf jeder der ebenen axialen Flächen (32a, 32b) eines der Schürzenteile (30) befestigt sind und zum ebenen Inkontaktkommen mit den ebenen axialen Flächen (33a, 33b) des anderen Schürzenteils (31) vorgesehen sind.

5. Spannvorrichtung nach Anspruch 4, wobei die Mittel (36, 37) aus magnetisiertem Werkstoff magnetisierte Scheiben umfassen, die zur Aufnahme in einer Absenkung (32c, 32d) vorgesehen sind, die in jeder der ebenen axialen Flächen (32a, 32b) eines der Schürzenteile (30) angefertigt ist, und auf dem Schürzenteil (30) unter Verwendung von Befestigungsmitteln (38, 39) befestigt sind.

6. Spannvorrichtung nach Anspruch 5, wobei die Mittel (38, 39) zum Befestigen der magnetisierten Scheiben (36, 37) auf den ebenen axialen Flächen (32a, 32b) des entsprechenden Schürzenteils (30) Befestigungsschrauben umfassen.

7. Spannvorrichtung nach einem der vorhergehenden Ansprüche, wobei das Zugelement (6) Mittel (22a, 22b, 23a, 23b, 24a, 24b) zum Zentrieren und Mittel (25, 26, 27) zum Befestigen der beiden halbzylindrischen Zugelementteile (14, 15) umfasst.

8. Spannvorrichtung nach Anspruch 7, wobei die Mittel zum Zentrieren der beiden Zugelementteile (14, 15) Stifte (22a, 22b), die in Löchern (20a, 20b, 21a, 21b) mit entsprechender Form angeordnet sind, die in jedem der Zugelementteile (14, 15) senkrecht zu den Verbindungsflächen (14a, 14b, 15a, 15b) angefertigt sind, und Zentrierschrauben (23a, 23b, 24a, 24b) umfassen, die in jeder der ebenen axialen Flächen (14a, 14b) eines der Zugelementteile (14) eingeschraubt sind und zum ebenen Inkontaktkommen mit den ebenen axialen Flächen (15a, 15b) des anderen Zugelementteils (15) vorgesehen sind.

9. Spannvorrichtung nach einem der Ansprüche 7 und 8, wobei die Mittel zum Befestigen der beiden Zugelementteile (14, 15) einen Befestigungsring (25) umfassen, der das Zugelement (6) umgibt und zum Aufschnappen auf das Zugelement (6) unter Verwendung von Aufschnappmitteln (26) vorgesehen ist.

10. Spannvorrichtung nach Anspruch 9, wobei der Befestigungsring (25) um das Zugelement (6) herum durch zylindrische Stifte (27) in Position gehalten wird, die zur Aufnahme in einer Absenkung (28a, 28b, 29a, 29b) in jeder der Verbindungsflächen (14a, 14b, 15a, 15b) der beiden Zugelementteile (14, 15) vorgesehen sind.

11. Verfahren zur Montage einer Spannvorrichtung (1) nach einem der vorhergehenden Ansprüche, wobei der Zylinder (8) und der Kolben (9) axial auf der vorzuspannenden Gewindestange (2) montiert werden, die beiden halbzylindrischen Zugelementteile (14, 15) radial um die Gewindestange (2) montiert werden, und die beiden halbzylindrischen Teile (30, 31) der Schürze radial um die Gewindestange (2) montiert werden.

12. Montageverfahren nach Anspruch 11, wobei der Befestigungsring (25) auf das Zugelement (6) aufgeschnappt wird.

13. Montageverfahren nach Anspruch 12, wobei, wenn die beiden Schürzenteile (30, 31) um die Gewindestange (2) herum montiert sind, die Anordnung aus dem Zylinder (8) und dem Kolben (9), den beiden halbzylindrischen Zugelementteilen (14, 15) und dem Befestigungsring (25) axial zur Fläche (4a) der vorzuspannenden Struktur (4) hin verschoben wird.

## Revendications

1. Dispositif de tension (1) d'une tige filetée (2) comprenant un actionneur (5) apte à exercer un effort axial de tension sur la tige filetée (2) par rapport à une structure à tensioner (4), ledit dispositif de tension (1) comportant un cylindre (8), un piston (9), une jupe tubulaire (7) en contact avec le cylindre (8) et une surface (4a) de ladite structure à tensioner (4), et un tirant (6) de transmission de l'effort axial de tension de l'actionneur (5) vers une extrémité (2a) de la tige filetée (2), **caractérisé en ce que** le tirant (6) et la jupe tubulaire (7) comprennent chacun au moins deux parties semi-cylindriques (14, 15 ; 30, 31) présentant chacune deux surfaces axiales (14a, 14b, 15a, 15b ; 32a, 32b, 33a, 33b) substantiellement planes, les deux surfaces axiales (14a, 14b ; 32a, 32b) d'une partie semi-cylindrique (14, 30) étant jointes radialement respectivement avec une des deux surfaces axiales (15a, 15b ; 33a, 33b) de l'autre partie semi-cylindrique (15, 31), de manière à former une pièce de révolution.

2. Dispositif de tension selon la revendication 1, dans lequel la jupe tubulaire (7) comprend des moyens de centrage (7a, 34a, 34b, 35a, 35b) et des moyens de fixation (36, 37, 38, 39) des deux parties semi-cylindriques de jupe (30, 31).

3. Dispositif de tension selon la revendication 2, dans lequel les moyens de centrage (34a, 34b, 35a, 35b) des deux parties de jupe (30, 31) comprennent des vis de centrage vissées dans chacune des surfaces axiales planes (32a, 32b) d'une des partie de jupe (30) et destinées à venir en appui plan avec les surfaces axiales planes (33a, 33b) de l'autre partie de jupe (31).

4. Dispositif de tension selon l'une quelconque des revendications précédentes, dans lequel les moyens de fixation (36, 37, 38, 39) des deux parties de jupe (30, 31) comprennent des moyens en matériau aimanté (36, 37) fixés sur chacune des surfaces axiales planes (32a, 32b) d'une des partie de jupe (30) et destinées à venir en appui plan avec les surfaces axiales planes (33a, 33b) de l'autre partie de jupe (31).

5. Dispositif de tension selon la revendication 4, dans lequel des moyens en matériau aimanté (36, 37) comprennent des rondelles aimantées destinés à être logées dans un lamage (32c, 32d) pratiqué sur chacune des surfaces axiales planes (32a, 32b) d'une des partie de jupe (30) et fixés sur ladite partie de jupe (30) par des moyens de fixation (38, 39).

6. Dispositif de tension selon la revendication 5, dans lequel les moyens de fixation (38, 39) des rondelles aimantées (36, 37) sur les surfaces axiales planes (32a, 32b) de la partie de jupe correspondante (30) comprennent des vis de fixation.

7. Dispositif de tension selon l'une quelconque des revendications précédentes, dans lequel le tirant (6) comprend des moyens de centrage (22a, 22b, 23a, 23b, 24a, 24b) et des moyens de fixation (25, 26, 27) des deux parties semi-cylindriques de tirant (14, 15).

8. Dispositif de tension selon la revendication 7, dans lequel les moyens de centrage de deux parties de tirant (14, 15) comprennent des goupilles (22a, 22b) disposées dans des perçages (20a, 20b, 21a, 21b) de forme correspondante pratiquées dans chacune des parties de tirant (14, 15) perpendiculairement aux surfaces de jonction (14a, 14b, 15a, 15b) et des vis de centrage (23a, 23b, 24a, 24b) vissées dans chacune des surfaces axiales planes (14a, 14b) d'une des partie de tirant (14) et destinées à venir en appui plan avec les surfaces axiales (15a, 15b) planes de l'autre partie de tirant (15).

9. Dispositif de tension selon l'une des revendications 7 à 8, dans lequel les moyens de fixation des deux parties de tirant (14, 15) comprennent un anneau de fixation (25) entourant le tirant (6) et destiné à venir se clipser sur le tirant (6) par des moyens de clipsage (26).

10. Dispositif de tension selon la revendication 9, dans lequel l'anneau de fixation (25) est maintenu en position autour du tirant (6) par des goupilles cylindriques (27) destinées à venir se loger dans un lamage (28a, 28b, 29a, 29b) pratiqué sur chacune des surfaces de jonction (14a, 14b, 15a, 15b) des deux parties de tirant (14, 15).

11. Procédé d'assemblage d'un dispositif de tension (1) selon l'une quelconque des revendications précédentes, dans lequel le cylindre (8) et le piston (9) sont montés axialement sur la tige filetée (2) à précontraindre, les deux parties semi-cylindriques de tirant (14 15) sont assemblées radialement autour de la tige filetée (2) et les deux parties semi-cylindriques de la jupe (30, 31) sont assemblées radialement autour de la tige filetée (2).

12. Procédé d'assemblage selon les revendications 11 et 9, dans lequel l'anneau de fixation (25) est clipsé sur le tirant (6).

13. Procédé d'assemblage selon la revendication 12, dans lequel une fois que les deux parties de jupe (30, 31) sont assemblées autour de la tige filetée (2), l'ensemble formé par cylindre (8) et le piston (9), les deux parties semi-cylindriques de tirant (14, 15) et l'anneau de fixation (25) est glissé axialement vers la surface (4a) de la structure à tensioner (4).
